# EUROPEAN PATENT APPLICATION

(11) **EP 2 499 909 A1**
(43) Date of publication of application: **19.09.2012**
(21) Application number: 12396003.1
(22) Date of filing: 15.03.2012
(51) Int. Cl.: A01K 59/04

(54) **Honey centrifuge**

(30) Priority: 15.03.2011 FI 20110092
(71) Applicant: Nuutero, Juha, 37370 Narva (FI)
(72) Inventor: Nuutero, Juha, 37370 Narva (FI)
(74) Representative: Nieminen, Taisto Tapani

(57) **Abstract**

Honey centrifuge which comprises a bearing-mounted rotation axis (3) to which axis (3) a rotating backmost end disc (1) of the centrifuge is attached and a rotating foremost end disc (1) of the centrifuge is attached at a distance from it in which case attachment stations are formed to the intermediate space of the mentioned end discs (1) for several honeycomb groups to be extracted in which case the honeycombs (2) of each honeycomb group can be pushed in turn to their attachment station when they are sliding to an extraction station while they are resting on supports (8, 9). In order to place the honeycombs (2) with various widths into the extraction station the mentioned supports (8, 9) are attached to adjustment pieces (7) which are joined to the rotating end discs (1) which adjustment pieces can be adjusted regarding their position such as by using elongated attachment holes (11), (12) for the attachment and that also interlocking elements (4) are adjusted to move with the mentioned adjustment pieces (7) and to change their position which interlocking elements prevent the sideway movement of the honeycomb group placed in the centrifuge.

## Description

Invention relates to a honey centrifuge which comprises a bearing-mounted rotation axis to which axis a rotating, backmost end disc of the centrifuge functioning as a supporting frame is attached and a rotating, foremost end disc of the centrifuge is attached at a distance from it and attachment stations are formed to the intermediate space of the mentioned end discs for several honeycomb groups to be extracted in which case the honeycombs of each honeycomb group can be pushed in turn to their attachment station when they are sliding to an extraction station while resting on supports.

Honey centrifuges according to the above shown preamble are previously known in which case they have a standard structure as an attachment structure of the honeycombs which standard structure is meant only for honeycombs of a certain size regarding its external dimensions. Due to this various honeycomb types must have their own centrifuge meant for them. Need for various centrifuge types causes harm and costs and correspondingly costs may pile up also for the person who has purchased an centrifuge regarding the fact that he/she needs to equalise his/her honeycombs to be similar.

In order to reduce various needs for an centrifuge caused by the size differences of the honeycombs, a new centrifuge solution has been developed with the help of which one can extract honeycombs with various sizes by adjusting the attachment tools of the honeycombs, such as the supports in the centrifuge. It is characteristic of the invention that in order to place the honeycombs with various widths to an extraction station the mentioned supports are attached to the adjustment pieces which can be adjusted regarding their position and are attached to the rotating end discs and that also interlocking elements are adjusted to move with the mentioned adjustment pieces and change their position which interlocking elements prevent the sideway movement of the honeycomb group placed in the centrifuge.

The advantage of the invention is the fact that the same centrifuge is suitable for extraction of several honeycombs with different sizes when the support and interlocking elements of the honeycombs can be adjusted in the centrifuge according to the width of the honeycombs. If the heights of the honeycombs vary, there is free space in the centrifuge for height variation. The result of the thickness variation of the honeycombs is that 11 or 9 honeycombs can be packed to the same extraction station instead of for example ten honeycombs. This difference in thickness will not cause problems. The width variation of the honeycombs must be taken into consideration regarding the adjusting. The moving of the supports located in the centrifuge and the moving of the interlocking elements realizing the sideway interlockings of the first and last honeycomb of the honeycomb group both occur at the same time by moving the subsidiary frame of the support into a new position. The moving and interlocking of the subsidiary frame into a new position occurs easily by opening the interlocking keeping it in its place for the duration of the movement.

In the following the invention is described more detailed by referring to the accompanying drawings in which
Figure 1 shows a honey centrifuge according to the invention seen from the end when the honeycombs are in their place in the centrifuge.
Figure 2 shows the location, support and interlocking of one honeycomb group with a maximum width in the centrifuge.
Figure 3 shows the location and support of a small-sized honeycomb in the centrifuge.
Figure 4 shows the frame of the centrifuge and a feed line directed to it.

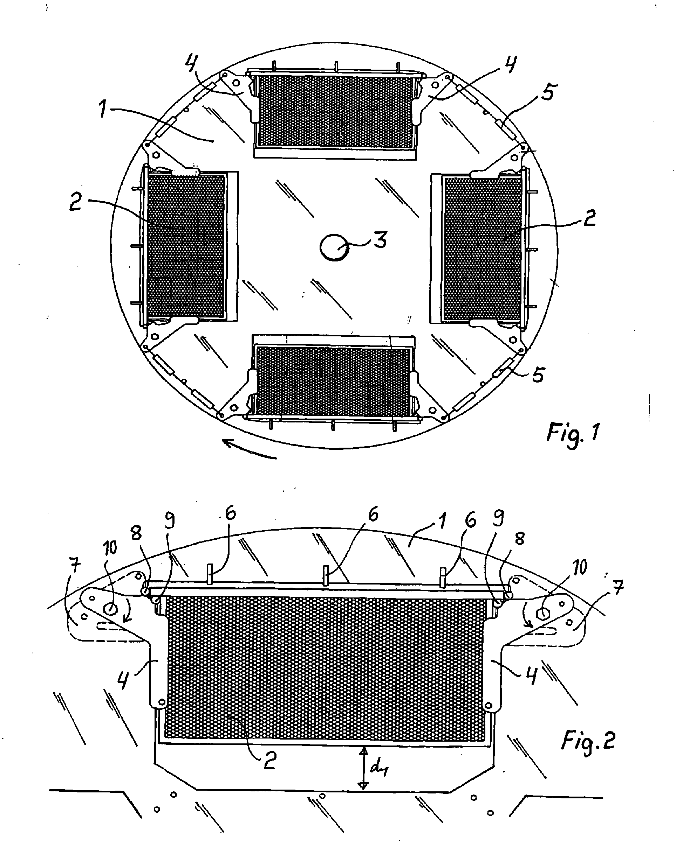

A honey centrifuge with four stations is shown in the figure 1 into each station of which honey centrifuge several honeycombs 2 can be packed to be extracted. The centrifuge has a rotation axis 3 to which two end discs 1 are attached at a distance from each other. The end discs 1 are equipped with four gaps the size of which gaps is a little bit bigger than the largest honeycomb 2 to be extracted. When the centrifuge is halted, the honeycombs 2 are being pushed into the stations one after another and thus all the stations are being filled. The outermost honeycomb 2 of the honeycomb group is locked with an interlocking element 4 which is turned into a locking position in such a way that a part of the interlocking element 4 turns in the back of the edge of the honeycomb 2. Springs 5 are adjusted to force the interlocking elements 4 into a closed position.

The hanging of the honeycombs 2 so that they rest on the supports 8 and 9 is shown more detailed in the figure 2. The supports 8 and 9 are round bars which extend from the foremost end disc 1 of the centrifuge to the backmost end wheel. The supports 8 and 9 are attached by welding to the adjustment pieces 7 which are located both at the foremost end disc 1 and at the backmost end wheel. The supports 8, 9 and the adjustment pieces 7 form a moveable subsidiary frame. The honeycomb 2 has a maximum width into which the supports 8 and 9 can be adjusted but there is still a distance d1 available in the height which however demands the honeycomb then to be narrower. There an edge at the upper part of the honeycombs 2 which edge rests on the support 9. Above the honeycomb group there are three band steels welded both to the foremost and to the backmost end disc and these prevent the honeycombs 2 from flying out of the centrifuge. The interlocking elements 4 turn around the bolt 10 functioning as a joint. The bolt 10 is adjusted to move together with the supports 8 and 9 during the adjusting. The supports 8, 9 can have other profile forms, too, or they can be combined to be one profile.

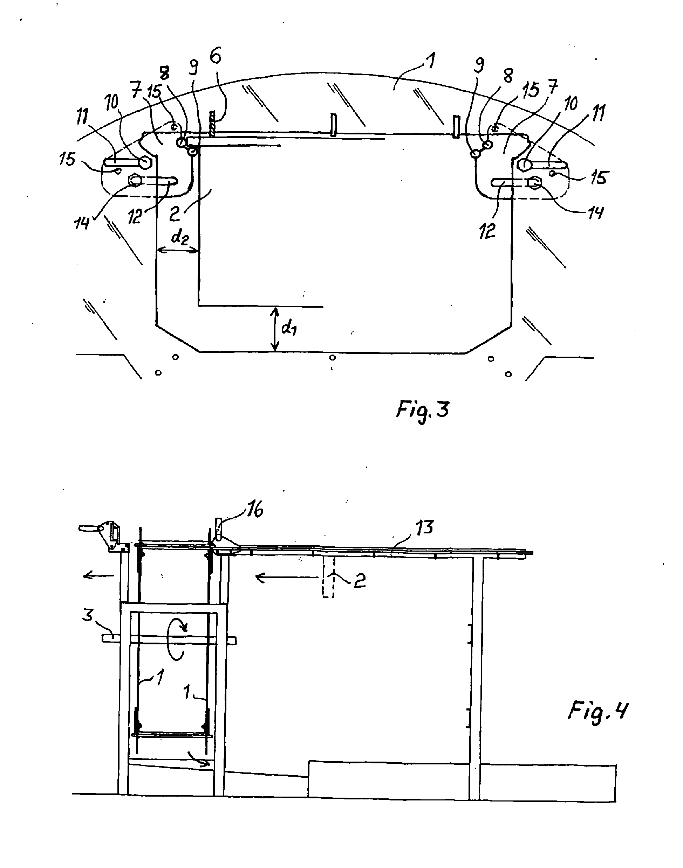

In the figure 3 one way of adjusting is shown with which the supports 8 and 9 and the knee bolt 10 of the interlocking element 4 are moved into a new position when the width of the honeycombs 2 changes. Moveable adjustment pieces 7 are attached onto the surface of both end discs 1 to which adjustment pieces supports 8 and 9 have thus been welded. An elongated hole 12 is made to the adjustment pieces 7 through which the adjustment piece is attached to the hole of the end disc 1 with a screw 14. The adjustment pieces 7 are attached to the end discs 1 also with a bolt 10 in such a way that for the bolt 10 there is a normal hole in the adjustment piece 7 but an elongated hole 11 in the end disc 1. In this solution the knee bolt 10 of the interlocking element 4 always moves with the adjustment piece and supports 8 and 9. When the adjustment piece is attached to the end disc with the help of two screws 10, 14 located near to each other and the screws are partly in large holes, it is possible to also turn the adjustment piece 7 a little bit in its position. This comes into question if the honeycombs 2 have upper edges with various heights. The upper edges of the honeycombs 2 can then be moved closer to the band steels 6 by turning the adjustment pieces.

In order to get the adjustment pieces 7 attached tight enough to the end discs 1 and make them stay in the adjusted position, the adjustment pieces 7 can for example include additional holes 15 and when the adjustment pieces are in the right position, holes are drilled at the location of these additional holes 15 in the end discs 1, too, and the adjustment pieces 7 are attached to the end discs 1 even through these, too, with a screw. When attachments are made through the additional holes 15 for several honeycomb sizes, these attachments and holes are ready at the end discs 1 when later the honeycomb size comes back to what it was earlier.

In order to move the adjustment pieces 7 and the joint 10 of the interlocking element in a sideway direction it is possible to use other solutions, too, than the elongated screw holes 11, 12. It is possible to move parts similar to the adjustment pieces in a slot or in an other rail towards each other and away and to lock them into position with a some kind of tightening screw. However in this context a usage of elongated attachment holes is shown as an example.

In the figure 4 the frame of the honey centrifuge is shown. The honeycombs 2 are fed along a rail 13 into the centrifuge which is halted in such a way that the honeycomb station located in the centrifuge is exactly at the location of the feed line 13. When the feed line 13 is connected to the centrifuge, the connection element functioning with the reversal of a handle 16 pushes the interlocking elements 4 away from behind the edge of the honeycombs 2 in which case the extracted honeycombs 2 can be removed to the left in the figure 4 and the full honeycombs 2 can be pushed from the rail 13 into the centrifuge. The width of the feed line must be adjusted also when the width of the honeycombs changes.

## Claims

1. Honey centrifuge which comprises a bearing-mounted rotation axis (3) to which axis (3) a rotating, backmost end disc (1) of the centrifuge is attached and a rotating, foremost end disc (1) of the centrifuge is attached at a distance from it in which case attachment stations are formed to the intermediate space of the mentioned end discs (1) for several honeycomb groups to be extracted in which case the honeycombs (2) of each honeycomb group can be pushed in turn to their attachment station when they are sliding to an extraction station while they are resting on supports (8, 9), **characterized in that** in order to place the honeycombs (2) with various widths into the extraction station the mentioned supports (8, 9) are attached to adjustment pieces (7) which are joined to the rotating end discs (1) which adjustment pieces can be adjusted regarding their position such as by using elongated attachment holes (11), (12) for the attachment and that also interlocking elements (4) are adjusted to move with the mentioned adjustment pieces (7) and to change their position which interlocking elements prevent the sideway movement of the honeycomb group placed in the centrifuge:

2. Honey centrifuge according to the claim 1, **characterized in that** elongated attachment holes (11); (12) are adjusted either to the end discs (1) or to the adjustment pieces proper (7) or to both.

3. Honey centrifuge according to the claim 1, **characterized in that** the interlocking elements (4) are turning pieces while resting on the joint (10) one part of which interlocking elements moves in the back of the edge of the honeycomb group during the locking situation.

4. Honey centrifuge according to the claim 1, **characterized in that** the interlocking elements (4) are adjusted to become open when the feed line (13) of the honeycombs is attached to the centrifuge.
